# EUROPEAN PATENT APPLICATION

(11) **EP 0 522 338 A1**
(43) Date of publication of application: **13.01.1993**
(21) Application number: 92110467.5
(22) Date of filing: 22.06.1992
(51) Int. Cl.: B60S 1/34

(54) **A windscreen wiper device with a mechanism for regulating the loading on the wiper arm**

(30) Priority: 26.06.1991 IT TO910489
(71) Applicant: INDUSTRIE MAGNETI MARELLI S.p.A., I-20128 Milano (IT)
(72) Inventor: Lombardi, Ruggiero, c/o Industrie Magneti, I-20011 Corbetta (Milano) (IT); Asero, Roberto, I-20148 Milano (IT)
(74) Representative: Quinterno, Giuseppe

(57) **Abstract**

The device comprises a motor-driven shaft (4) on which is fixed a blade-holder arm (12). The device comprises at least one variable-load helical spring (44) which tends to maintain the wiper blade pressed against the windscreen of the vehicle. The spring (44) cooperates with a cam (26) connected to an actuator adapted to vary the angular position of the cam (26) as a function of the speed of the vehicle.

## Description

The present invention relates to a windscreen wiper device for motor vehicles, according to the pre-characterising portion of claim 1.

From DE-A-38 29 939, which represents the closest prior art in respect to the present invention, a windscreen wiper device is known comprising an extension spring arranged to exert a traction between blade-holder arm and a base element fixed to a rotatable shaft. The device comprises an adjustable cam controlled by an actuator and connected to the spring so as to vary the loading on the blade-holder arm as a function of the speed of the motor vehicle. The spring is connected to the cam by means of a lever pivotally supported by the base element and having a first end connected to the spring and a second end engaged in a groove having an inwardly facing surface constituting the profile of the cam.

The object of the present invention is to provide a device of the type mentioned above which is simpler to manufacture and more compact than the known device and which does not require a pivoting lever interposed between the cam and the spring.

According to the invention, this object is achieved by a windscreen wiper device having the features defined in claim 1.

Further characteristic features and advantages of the present invention will become evident from the ensuing detailed description in which reference is made to the attached drawings which are provided purely by way of non-limitative example and in which:
Fig. 1 is a partial cross-section through a windscreen wiper device according to the present invention,
Fig. 2 is a section taken on the line II-II in Fig. 1,
Fig. 3 is a section corresponding to Fig. 2 illustrating the device in a different embodiment,
Fig. 4 is a partial view of the part indicated by the arrow IV in Fig. 1 and
Fig. 5 is a diagram illustrating the operation of the device according to the invention.

With reference to the drawings, reference numeral 1 denotes a windscreen wiper device comprising a fixed casing 2 in which is rotatably mounted a tubular shaft 4 which is caused to rotate in alternating directions about its longitudinal axis A by a kinematic transmission system of per se known type which is not described in detail in that it goes beyond the scope of the present invention.

On one end 6 of the motor-driven shaft 4 is fixed a base element 8. The element 8 carries a pivot pin 10 at right-angles to the axis A on which is articulated a blad-holder arm 12.

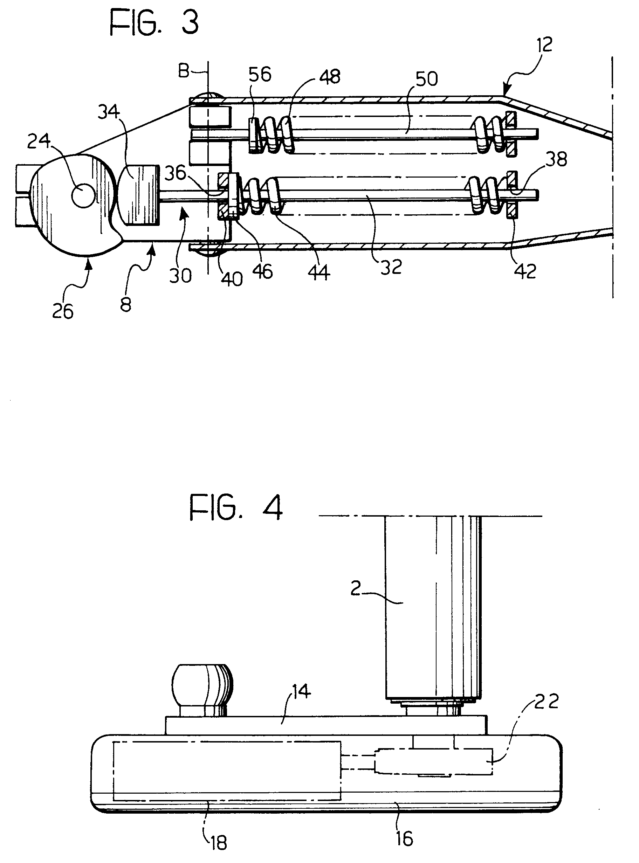

The motor-driven shaft 4 is fixed to a rocker 14 which forms part of the kinematic system which controls the oscillation of the shaft 4. Fixed to the rocker 14 is a casing 16 in which is housed an electric motor 18 (Fig. 4). The shaft of the motor 18 carries and endless worm 20 which meshes with a helical gear 22. The helical gear 22 is fixed to one end of an operating shaft 24 which is rotatably mounted within the motor-driven shaft 4. A cam 26 is fixed on one end 28 of the operating shaft 24 which emerges beyond the end 6 of the motor-driven shaft 4.

Reference numeral 30 denotes transmission means consisting of a rod 32 at the end of which is fixed a head 34 which is maintained in contact with the profile of the cam 26. The rod 32 extends through a pair of holes 36, 38 made respectively through flanges 40, 42 carried by the windscreen wiper arm 12. Wound onto the rod 32 is a helical compression spring 44 the ends of which act on the flange 42 and respectively on a small plate 46 fixed to the rod 32.

Reference numeral 48 denotes a second helical compression spring disposed in parallel with the first spring 44. The spring 44 is mounted on a rod 50 which is anchored to the base element 8 but which is free to rotate relative to this latter about an axis B. The free end of the rod 50 passes through a hole 52 made in a flange 54 in the blade-holder arm 12. The ends of the second spring 48 act on the flange 54 and respectively on the small plate 56 carried by the rod 50.

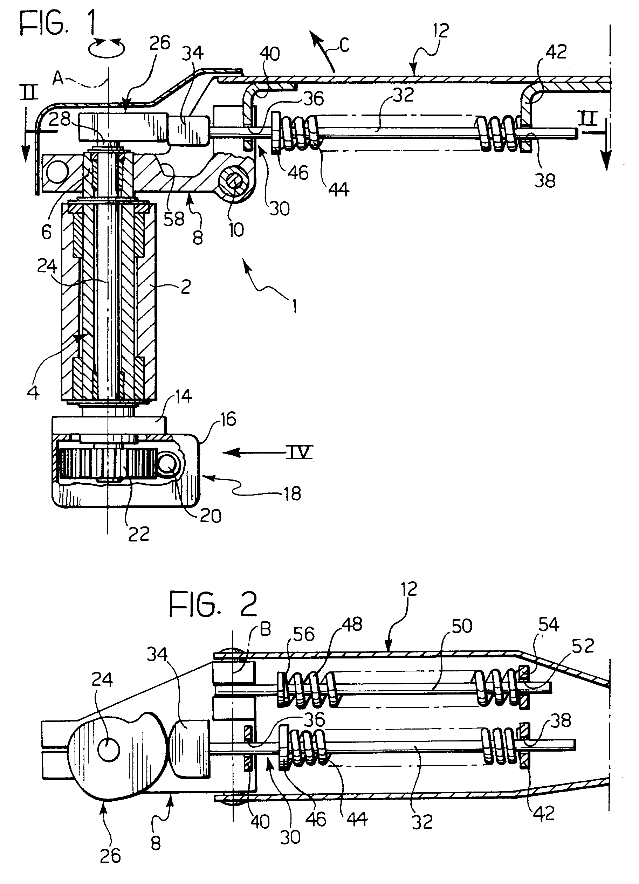

As Fig. 1 shows, the base element 8 comprises a recess 58 which is intended to receive the head 34 of the comparator means 30 when the blade-holder arm 12 is raised from the windscreen of the vehicle by a rotation about the pivot pin 10 in the direction indicated by the arrow C.

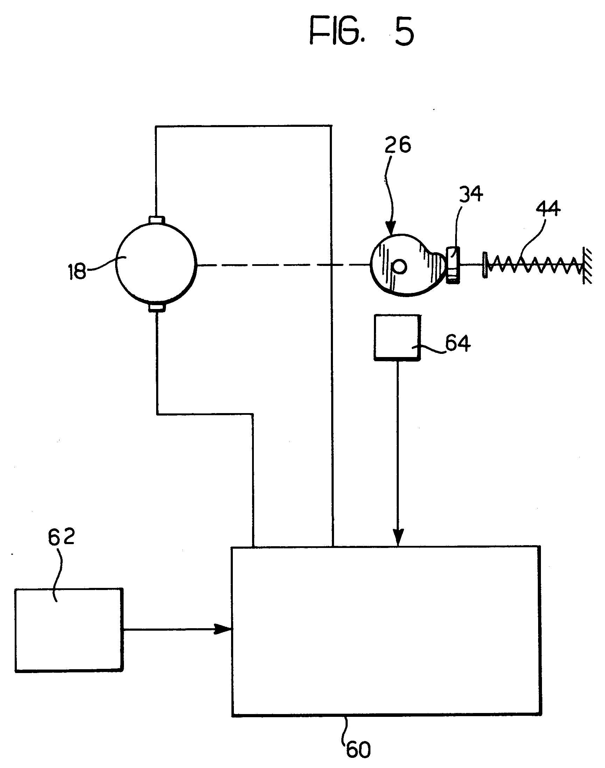

With reference to Fig. 5, the reference numeral 60 denotes an electronic control unit which operates the electric motor 18 as a function of signals received from a vehicle speed sensor 62 and from a sensor 64 which records the angular position of the cam 26.

Fig. 2 illustrates the position of the cam 26 which corresponds to a high vehicle running speed. In this embodiment, the spring 44 is in its state of maximum compression and therefore the force with which the windscreen wiper blade is pressed on the windscreen of the vehicle is at its maximum level.

Fig. 3 illustrates to position of the cam 26 which corresponds to the zero speed condition of the vehicle or to the condition of disconnected windscreen. In this case, the spring 44 is in the condition of maximum expansion which corresponds to the minimum loading on the windscreen wiper blade. By means of the motor 18, it is possible to obtain any position of the cam 26 midway between the extreme positions illustrated in Figs. 2 and 3. In this way, it is possible to adapt the loading on the windscreen wiper blade to the travelling speed of the vehicle, obtaining optimum windscreen wiper action.

## Claims

1. A windscreen wiper for motor vehicles, comprising:
- a motor-driven shaft (4) arranged to rotate in alternating directions about its longitudinal axis (A),
- a base element (8) fixed to the motor-driven shaft (4),
- a blade-holder arm (12) articulated on the base element (8) about an axis (10) substantially at right-angles to the axis (A) of the shaft (4),
- at least one helical spring (44) interposed between the base element (8) and the blad-holder arm (12), tending to maintain the windscreen-wiper blade pressed against the windscreen of the vehicle,
- a cam (26) adjustably mounted about the axis (A) of the shaft (4) and connected to an actuator (18) adapted to vary the angular position of the cam (26) about said axis (A) as a function of the speed of the vehicle, and
- transmission means adapted to vary the loading on the spring (44) as a function of the angular position of the cam (26),
characterised in that said transmission means comprise a rod (32) slidably supported by the blade-holder arm (12) and extending coaxially with the helical spring (44), the spring (44) being compressed between a small plate (46) fixed to the rod (32) and a flange (42) carried by the blade-holder arm (12) so as to bias a head (34) of the rod (32) in contact with an outwardly facing profile of the cam (26).

2. A device according to Claim 1, characterised in that the said motor-driven shaft (4) consists of a tubular element in which there is rotatably mounted a shaft (24) for operating the said cam (26).

3. A device according to Claim 2, characterised in that the aforesaid actuator (18) consists of an electric motor connected to the shaft (24) for operating the cam (26) by a mechanism with a helical gear and an endless worm (20, 22).

4. A device according to Claim 1, characterised in that the actuator (18) for operating the cam (26) is disposed in a casing (16) which is rigid with the said motor-driven shaft (4).

5. A device according to Claim 1, characterised in that the aforesaid actuator (18) is operated by a control unit (60) connected to a vehicle speed sensor (62) and to a sensor (64) adapted to detect the angular position of the cam (26).

6. A device according to any of the preceding claims, characterised in that it comprises a second helical compression spring (48) disposed in parallel with the first and interposed between the base element (8) and a flange (54) on the blade-holder arm (12).
